**Europäisches Patentamt**

**European Patent Office**

**Office européen des brevets**

(19)

(11) Publication number : **0 360 159 B1**

(12) # EUROPEAN PATENT SPECIFICATION

(45) Date of publication of patent specification :
25.01.95 Bulletin 95/04

(51) Int. Cl.⁶ : **G01N 27/12**

(21) Application number : **89117052.4**

(22) Date of filing : **14.09.89**

(54) **Method of producing thick-film gas sensor element having improved stability.**

(30) Priority : **19.09.88 JP 234633/88**

(43) Date of publication of application :
**28.03.90 Bulletin 90/13**

(45) Publication of the grant of the patent :
**25.01.95 Bulletin 95/04**

(84) Designated Contracting States :
**DE FR GB IT**

(56) References cited :
EP-A- 0 140 340
EP-A- 0 238 081
PATENT ABSTRACTS OF JAPAN vol. 13, no.
32 (P-817)(3380), 25 January 1989; &
JP-A-63231255
SENSORS & ACTUATORS vol. 13, no. 4, April
1988, pages 339-349, Lausanne, CH;
T.KOBAYASHI et al.: "A Selective Co Sensor
Using Ti-Doped alpha-Fe2O3 with Copreci-
pated Ultrafine Particles of Gold"
PATENT ABSTRACTS OF JAPAN vol. 11, no.
173 (P-582)(2620), 4 June 1987; &
JP-A-62005165

(73) Proprietor : **NGK Spark Plug Co. Ltd.**
**No. 14-18, Takatsuji-cho**
**Mizuho-ku**
**City of Nagoya Aichi Prefecture (JP)**

(72) Inventor : **Matsuura, Toshitaka c/o NGK Spark**
**Plug Co., Ltd.**
**No. 1-18, Takatsuji-cho**
**Mizuho-ku**
**Nagoya City Aichi Prefecture (JP)**
Inventor : **Furusaki, Keizo c/o NGK Spark Plug**
**Co., Ltd.**
**No. 1-18, Takatsuji-cho**
**Mizuho-ku**
**Nagoya City Aichi Prefecture (JP)**
Inventor : **Nasu, Mineiji c/o NGK Spark Plug**
**Co., Ltd.**
**No. 1-18, Takatsuji-cho**
**Mizuho-ku**
**Nagoya City Aichi Prefecture (JP)**
Inventor : **Takami, Akio c/o NGK Spark Plug**
**Co., Ltd.**
**No. 1-18, Takatsuji-cho**
**Mizuho-ku**
**Nagoya City Aichi Prefecture (JP)**

(74) Representative : **Patentanwälte Grünecker,**
**Kinkeldey, Stockmair & Partner**
**Maximilianstrasse 58**
**D-80538 München (DE)**

## Description

BACKGROUND OF THE INVENTION

This invention relates to a method of producing a gas sensor element having a porous film of a gas sensitive material formed by a thick-film technique on a ceramic substrate so as to cover electrode films precedingly formed on the substrate, the method including steps for improving the strength and stability of the contact between the gas sensitive thick-film and the electrode films.

In gas sensor elements of the aforementioned type, viz. thick-film gas sensor elements, usually the gas sensitive thick-film is formed on a flat and smooth surface of a ceramic substrate so as to make contact with both the substrate surface and the precedingly formed electrode films. A problem about this construction is that the thick-film is liable to partially peel from the substrate surface during practical use of the gas sensor due to a difference between the thermal expansion coefficients of the thick-film and the ceramic substrate.

To enhance the strength of the contact of the gas sensitive thick-film, JP-A 60-93949 proposes to intentionally produce minute undulations in the ceramic substrate surface before forming the thick-film by applying ceramic grains to the substrate surface. However, even it this measure is taken, the tightness of contact of the thick-film with the underlying electrode films is still insufficient in a microscopical sense, so that the internal resistance between the thick-film and the electrode films is liable to deviate from a standard value. Besides, there is another cause of an increase in the internal resistance and resultant deterioration of the gas sensing performance during use of the gas sensor element. That is, impurities contained in the substrate and/or the thick-film migrate to accumulate in the micropores of the thick-film in the region adjacent the interface between the thick-film and each of the underlying electrode films.

Concerning the problem of the increase in the aforementioned internal resistance, we recognized that because of the contact of the gas sensitive thick-film and the electrode films in a plane there occurs concentration of an interfacial tension in the directions parallel to the plane, and that due to the concentration of the interfacial tension the tightness of contact between the thick-film and each electrode film becomes worse as time elapses with a resultant increase in the contact resistance.

JP-A 62-5165 proposes to interpose a conductor between the gas sensitive porous thick-film and each of the underlying electrode films by depositing platinum or an alloy or mixture of platinum with another noble metal. The deposition of the noble metal is accomplished by impregnating the porous thick-film with a solution of a nobel metal compound and then making a heat treatment. By the deposition of the noble metal conductor at the interface between the thick-film and each electrode film, the manner of contact between the thick-film and each electrode film changes from two-dimensional contact to three-dimensional contact. Therefore, the strength of contact augments and the concentration of tension in the directions parallel to the interface is relieved, and consequently the contact resistance is stabilized. However, it has been revealed that the manner of the deposition of the noble metal is greatly influenced by the conditions of the heat treatment in a reducing gas atmosphere. In this regard we have already proposed in Japanese patent application No. 62-65055 filed march 19, 1987 (published September 27, 1988 as JP-A 63-231255) to carry out the heat treatment of the thick-film impregnated with a solution of a platinum compound in hydrogen gas at a temperature in the range from 60 to 180°C. After that we have reached the present invention by finding still better conditions of the heat treatment.

SUMMARY OF THE INVENTION

It is an object of the present invention to provide a method of producing a thick-film gas sensor element in which the contact between the gas sensitive thick-film and the underlying electrode films are improved in strength, uniformity and stability by the deposition of a noble metal conductor at the interface between the thick-film and each electrode film.

The present invention provides a method of producing a thick-film gas sensor element, the method comprising the steps of forming at least one pair of electrode films on a surface of a ceramic substrate by using at least one metal of the platinum group as the principal material of the electrode films, applying a paste comprising a powder of a gas sensitive material to the surface of the ceramic substrate so as to cover selected portions of the electrode films together with a selected area of the substrate surface and firing the applied paste to thereby form a porous thick-film of the gas sensitive material, impregnating the porous thick-film with a solution of at least one compound of a metal of the platinum group and thereafter maintaining the substrate in a reducing gas atmosphere having a controlled humidity at a temperature in the range from -5°C to 180°C to thereby deposit a conductor comprising at least one metal of the platinum group at the interface between the thick-film and each of the electrode films.

In a gas sensor element to be produced by a method according to the invention, the principal component of the gas sensitive material is usually a transition metal oxide which exhibits a change in its electrical resistance with a change in the concentration of a specific gas in an environmental gas atmosphere. For example, $SnO_2$, ZnO or $Fe_2O_3$ is used in a propane gas sensor or a humidity sensor, and $TiO_2$ or CoO is used in an oxygen sensor.

The electrode films are usually formed by a thick-film technique using a paste containing a powder of the electrode material. In thick-film gas sensor elements for use at high temperatures the electrode material is usually platinum or an alloy or mixture of platinum and another metal of the platinum group such as rhodium or palladium. As the conductor to be deposited at the interface between the gas sensitive thick-film and each electrode film, it is suitable to employ the noble metal(s) used as the electrode material.

In the method according to the invention, after impregnating the gas sensitive thick-film with a solution of a noble metal compound the treatment of the sensor element in a reducing gas is performed by controlling the humidity in the reducing gas atmosphere correlatively to the treating temperature which should be in the range from -5°C to 180°C. When the temperature is from about 60°C to about 95°C, relative humidity in the reducing gas atmosphere may take any value between 0% and 100%. When the temperature is higher than about 95°C it is necessary that relative humidity in the gas atmosphere be higher than 0%, and the lower limit of the humidity becomes higher as the temperature becomes higher. When the temperatue is lower than about 60°C it is necessary that relative humidity in the gas atmosphere be lower than 100%, and the upper limit of the humidity becomes lower as the temperature becomes lower.

As the reducing gas it is suitable to use hydrogen gas or carbon monoxide gas, and if desired the reducing gas may be diluted with an inactive gas such as nitrogen.

Optionally, the treatment in a reducing gas atmosphere may be followed by a heat treatment at a temperature above about 150°C, preferably above 200°C, in the air, a reducing gas such as hydrogen or an inactive gas such as nitrogen. This heat treatment is effective for completely decomposing the noble metal compound(s) possibly remaining in the gas sensitive thick-film and/or at the aforementioned interface and consequently for further stabilizing the deposited noble metal conductor.

By the method according to the invention a noble metal conductor such as platinum deposits at the interface between the gas sensitive porous thick-film and each of the underlying electrode films with good uniformity of dispersion in the interface. In the obtained gas sensor element the noble metal conductor interposes between the gas sensitive thick-film and each electrode film, so that the contact between the two films surely becomes three-dimensional. Therefore, the contact is reinforced and stabilized, and the internal resistance of the gas sensor element does not seriously deviate from a standard value and does not seriously change during use of the sensor element.

The noble metal conductor deposits not only at the aforementioned interface but also in the gas sensitive porous thick-film in the region adjacent the interface to fill the micropores in that region. The deposition of the conductor in the micropores near the interface is effective for preventing impurities from migrating into and accumulating in these pores to cause an increase in the internal resistance of the sensor element as an aging phenomenon.

Thus, the method according to the invention serves the purpose of producing a thick-film gas sensor element improved in the stability of its function and also in durability, and by this method such an improved sensor element can be produced stably and efficiently.

BRIEF DESCRIPTION OF THE DRAWINGS

Figs. 1, 3, 5, 7, 9 and 11 are plan views of an unfired ceramic substrate under processing for producing a thick-film gas sensor element and illustrate the sequential steps of a method according to the invention;
Figs. 2, 4, 6, 8, 10 and 12 are cross-sectional or end elevational views of the unfired ceramic substrate corresponding to Figs. 1, 3, 5, 7, 9 and 11, respectively;
Fig. 13 is a plan view of the thick-film gas sensor element and shows the manner of connecting electrical terminals to the sensor element;
Fig. 14 is a side elevational view of the gas sensor element in Fig. 13;
Fig. 15 is partly cutaway plan view of a gas sensor using the thick-film gas sensor element shown in Figs. 13 and 14; and
Fig. 16 is a chart showing suitable and unsuitable temperature and humiditiy conditions of the treatment of an unfinished thick-film gas sensor element in a reducing gas atmosphere in producing the gas sensor element by a method according to the invention.

## DESCRIPTION OF THE PREFERRED EMBODIMENTS

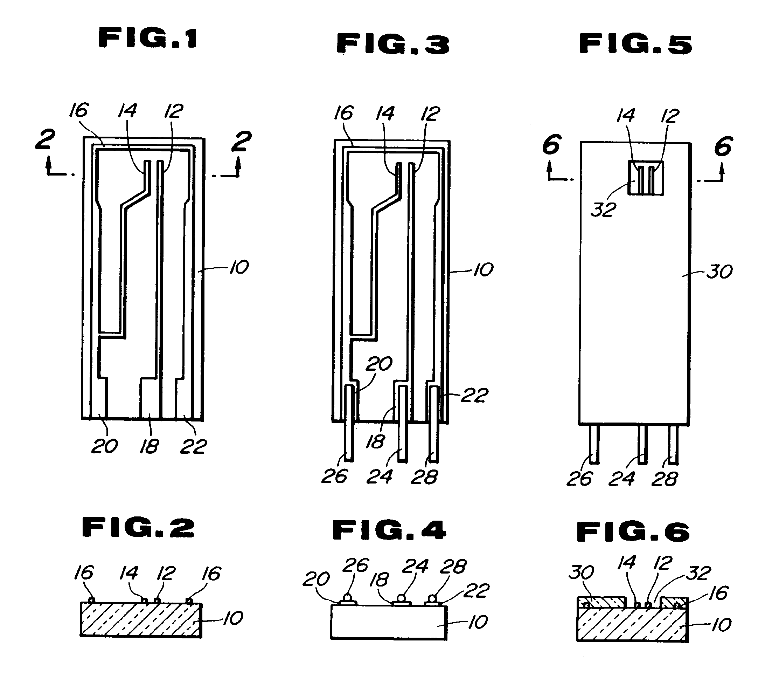

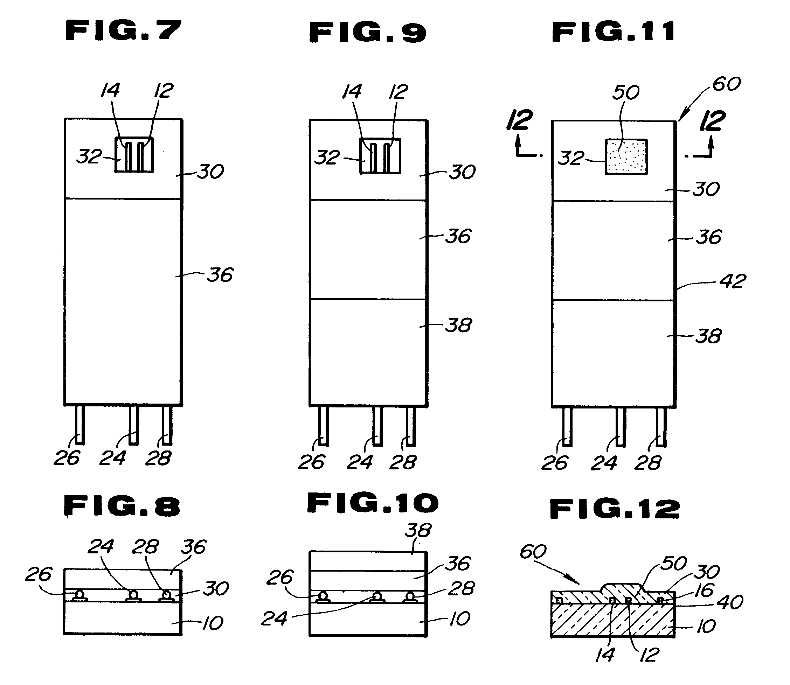

As an embodiment of the invention, a thick-film gas sensor element is produced by the following process. The gas sensor element has a sintered ceramic substrate which is provided with a pair of electrodes and a resistance heater element. The principal material of the substrate is a ceramic material high in heat resistance such as, for example, alumina, mullite, steatite or forsterite. Figs. 1 to 10 illustrate the process of preparing the ceramic substrate, and Figs. 11 and 12 illustrate the formation of a thick-film of a gas sensitive substance on the ceramic substrate.

In Fig. 1 numeral 10 indicates a green sheet which turns into a ceramic plate by firing. This green sheet 10 is formed so as to provide a main part of the ceramic substrate of the gas sensor element. Fig. 2 is a sectional view taken along the line 2-2 in Fig. 1. On the upper surface of the green sheet 10, first and second electrode patterns 12 and 14 are formed by a thick-film printing method using a conductive paste such as a platinum paste. Besides, a heater pattern 16 is formed by the same method so as to join with the second electrode pattern 14 in a terminal section, and terminal patterns 18, 20 and 22 are supplemented to the electrode and heater patterns.

As shown in Figs. 3 and 4, lead wires 24, 26 and 28 are attached to the terminal patterns 18, 20, and 22, respectively.

Referring to Fig. 5, another green sheet 30 is placed on the green sheet 10. The two green sheets 10 and 30 have the same width and the same length so that the printed patterns on the surface of the green sheet 10 are all covered by the green sheet 30. However, in advance the green sheet 30 is formed with a window-like opening 32 such that tip portions of the two electrode patterns 12, 14 are exposed in this opening 32. Fig. 6 is a sectional view taken along the line 6-6 in Fig. 5. The green sheet 30 is tightly bonded to the green sheet 10 by application of heat and pressure.

Referring to Figs. 7 and 8, a green sheet 36 shorter than the green sheets 10 and 30 is placed on and bonded to the green sheet 30 by application of heat and pressure. Furthermore, as shown in Figs. 9 and 10, a still shorter green sheet 38 is placed on and bonded to the green sheet 36 by application of heat and pressure. As the result the major part of the green sheet 30 is covered stepwise by the two green sheets 36 and 38, but the opening 32 is left exposed. These green sheets 36 and 38 are added for the purpose of reinforcing the ceramic substrate.

In the state shown in Fig. 9, it is preferred to apply ceramic grains to the exposed surface of the green sheet 30 and the surface of the green sheet 10 exposed in the opening 32 for the purpose of providing minute undulations to the mentioned surfaces. The material of the ceramic grains is similar to the ceramic material of the green sheets. For example, the ceramic grains are about 100 $\mu$m in diameter.

After that the laminate in Fig. 9 is fired at a temperature suitable for sintering of the employed ceramic material.

Referring to Fig. 11 and Fig. 12 which is a sectional view taken along the line 12-12 in Fig. 11, by the above firing operation the initially laminated green sheets 10 and 30 turn into a ceramic substrate 40 while the overlying green sheets 36 and 38 turn into a ceramic cover layer 42 which is tightly and unitarily adhering to the ceramic substrate 40. The opening 32 in the green sheet 30 becomes a recess in the ceramic substrate 40. In the ceramic substrate 40 the electrode patterns 12 and 14 have turned into metallic electrode films and the heater pattern 18 into a metallic resistor film.

Next, a porous thick-film 50 of a gas sensitive material is formed so as to entirely and tightly cover the substrate surface and the tip portions of the electrodes 12, 14 exposed in the recess 32. To form the thick-film 50 a paste containing a powder of the gas sensitive material is applied to the ceramic substrate 40 to fill the recess 32 with the paste. The method of applying the paste to fill the recess 32 can be chosen from ordinary methods such as thick-film printing method, dropping or dripping method, etc. The applied paste may heap above the upper surface of the substrate 40 as shown in Fig. 12. By firing the paste on the substrate under suitable conditions, which depend on the kind of the gas sensitive material, the paste film turns into a solid and porous thick-film 50 of the gas sensitive substance.

By the above operations a thick-film gas sensor element 60 is seemingly completed. However, according to the invention it is essential to subsequently perform the following operations.

The porous thick-film 50 is treated with a solution of at least one kind of platinum group metal compound, which decomposes under reducing conditions to deposit the platinum group metal, such that the solution permeates into the thick-film 50. It is suitable to employ a compound of the platinum group metal used as the material of the electrodes 12, 14. Usually an aqueous solution is used, and the thick-film 50 impregnated with the solution is dried at a temperature not higher than 150°C to remove a large portion of water from the solution. The drying is not an essential operation, but this is favorable for the efficiency of the subsequent operation.

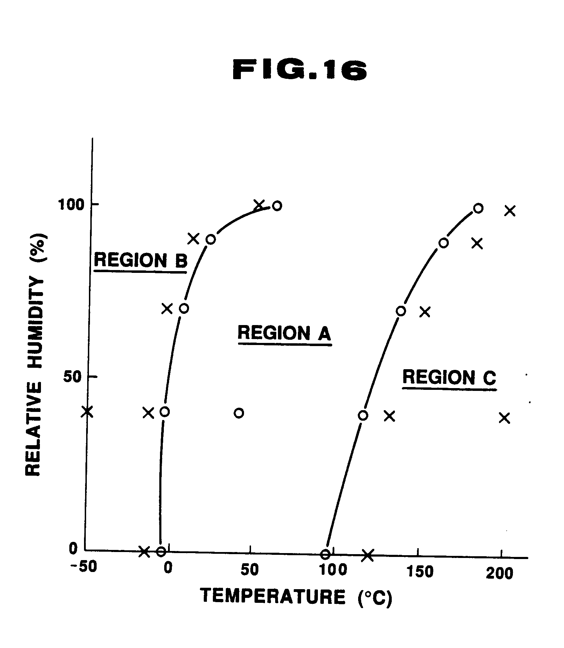

Next, the nearly finished gas sensor element 60 is maintained in a reducing gas atmosphere of a controlled humidity at a temperature chosen within the range from -5°C to 180°C to accomplish decomposition of the platinum group metal compound(s) in the thick-film 50 and resultant deposition of the platinum group metal(s) at the interface between the thick-film 50 and each of the electrode films 12 and 14. Since the electrodes 12, 14 made of the platinum group metal provide nuclei of deposition of the metal, deposition of the metal(s) from the decomposed compound(s) occurs preferentially on the surfaces of the electrode films 12, 14 and in the micropores of the thick-film 50 in a region adjacent the electrode surfaces. The temperature of the reducing gas atmosphere and the humidity in the gas atmosphere should be correlatively chosen such that the temperature and the humidity, in terms of relative humidity, fall in the Region A between the curves I and II in the chart of Fig. 16. That is, when the temperature is within the range from 60 to 95°C the value of the relative humidity is arbitrary, but when the temperature is higher than 95°C there is a lower limit to the humidity and when the temperature is lower than 60°C there is an upper limit to the humidity.

After the treatment in the reducing gas atmosphere for the deposition of the platinum group metal(s), it is optional to heat the gas sensor element to a temperature of 150°C or above in either the air or a reducing gas atmosphere for decomposing the platinum group metal compound(s) possibly remaining undecomposed and stabilizing the deposited platinum group metal(s).

EXAMPLE

A thick-film oxygen sensor element of the construction shown in Fig. 11 was produced by the process described above with reference to Figs. 1 to 12.

The principal material of the green sheets 10, 30, 36 and 38 was a mixture of 92 wt% $Al_2O_3$ powder, 4 wt% of $SiO_2$ powder, 2 wt% of CaO powder and 2 wt% of MgO powder. Every powder had a mean particle size of 1.5 $\mu$m. A slurry was prepared by mixing 100 parts by weight of this powder mixture with 12 parts by weight of a polyvinyl butyral resin and 6 parts by weight of dibutylphthalate in an organic solvent, and the slurry was used to form each green sheet by a doctor blade method. The green sheet 10 had a thickness of 1 mm, and the green sheet 30 had a thickness of 0.8 mm.

The electrode patterns 12, 14, the heater pattern 16 and the terminal patterns 18, 20, 22 were formed by using a paste containing Pt powder and $Al_2O_3$ powder amounting to 7 wt% of the Pt powder. The lead wires 24, 26, 28 were platinum wires having a diameter of 0.2 mm.

The firing of the laminated green sheets in the state of Fig. 9 was performed in the air at 1500°C for 2 hr.

The porous thick-film 50 was formed by using a paste prepared by mixing 100 parts by weight of $TiO_2$ powder having a mean particle size of 1.2 $\mu$m and 3 parts by weight of ethyl cellulose in 2-(2-butoxy-ethoxy)ethyl alcohol to adjust the viscosity of the mixture to 300 poises. The firing of the $TiO_2$ paste (50) applied to the substrate 40 was performed in the air at 1200°C for 1 hr.

A number of samples of the oxygen sensor element (60) were produced by the same method and under the same conditions, and the porous thick-film 50 of $TiO_2$ in each sample was impregnated with an aqueous solution of chloroplatinic acid (200 g/l) by dropping 2 $\mu$l of the solution to the thick-film 50. For only one sample the chloroplatinic acid solution was modified by adding rhodium chloride such that the weight ratio of Pt to Rh contained in the solution became 90:10. After that each sample was maintained in a reducing gas for 60 min, except one sample which was maintained in the same gas atmosphere only for 5 min. The temperature of the reducing gas atmosphere and relative humidity in the gas atmosphere were variously set as shown in Table 1.

5

TABLE 1

| Sample No. | Reducing Gas | Tempera-ture ($^{o}$C) | Relative Humidity (%) | Treating Time (min) |
|---|---|---|---|---|
| 1 | $H_2$ | 50 | 100 | 60 |
| 2 | ditto | 60 | 100 | 60 |
| 3 | ditto | 180 | 100 | 60 |
| 4 | ditto | 200 | 100 | 60 |
| 5 | ditto | 10 | 90 | 60 |
| 6 | ditto | 20 | 90 | 60 |
| 7 | ditto | 160 | 90 | 60 |
| 8 | ditto | 180 | 90 | 60 |
| 9 | ditto | −5 | 70 | 60 |
| 10 | ditto | 5 | 70 | 60 |
| 11 | ditto | 135 | 70 | 60 |
| 12 | ditto | 150 | 70 | 60 |
| 13 | ditto | −50 | 40 | 60 |
| 14 | ditto | −15 | 40 | 60 |
| 15 | ditto | −5 | 40 | 60 |
| 16 | ditto | 40 | 40 | 60 |
| 17 | ditto | 40 | 40 | 5 |
| 18 *1 | ditto | 40 | 40 | 60 |
| 19 *2 | ditto | 40 | 40 | 60 |
| 20 | CO | 40 | 40 | 60 |
| 21 | $H_2(1\%)/N_2(99\%)$ | 40 | 40 | 60 |
| 22 *3 | $H_2$ | 40 | 40 | 60 |
| 23 | ditto | 115 | 40 | 60 |
| 24 | ditto | 130 | 40 | 60 |
| 25 | ditto | 200 | 40 | 60 |
| 26 | ditto | −15 | 0 | 60 |
| 27 | ditto | −5 | 0 | 60 |
| 28 | ditto | 95 | 0 | 60 |
| 29 | ditto | 120 | 0 | 60 |

Notes

*1: Sample No. 18 was subsequently heated in $H_2$ at 700°C for 2 hr.

*2: Sample No. 19 was subsequently heated in the air at 700°C for 2 hr.

*3: Sample No. 22 was produced by impregnating the thick-film (50) with the mixed solution of chloroplatinic acid and rhodium chloride.

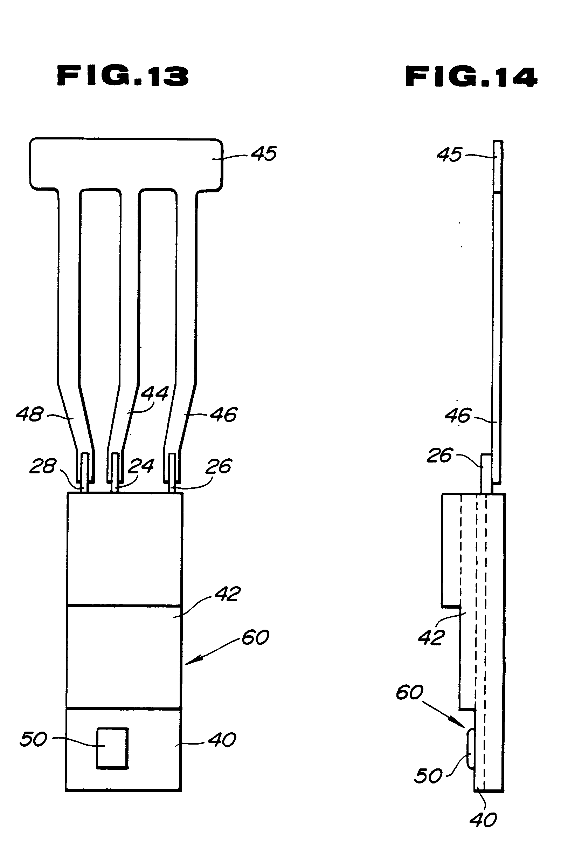

After the above treatment, electrical terminals were connected to each oxygen sensor element sample (60). Referring to Figs. 13 and 14, a terminal member having three terminals 44, 46, 48 and a common runner part 45 was formed by etching a nickel sheet having a thickness of 0.3 mm, and the three terminals 44, 46 and 48 were welded to the platinum lead wires 24, 26 and 28 of the oxygen sensor element 60, respectively. (The runner part 45 was removed before installing the sensor element 60 in an oxygen sensor.)

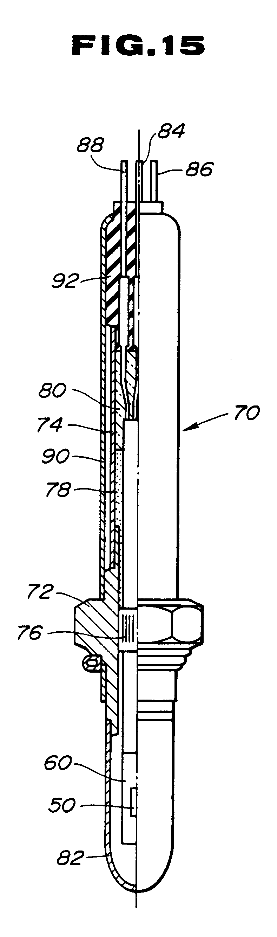

After that each oxygen sensor element sample was installed in an oxygen sensor for use in the exhaust system of an internal combustion engine. Fig. 15 shows this oxygen sensor at 70. The oxygen sensor 70 has a metal shell 72 for attachment to the exhaust manifold or exhaust pipe of the engine, an inner tube 74 for holding the oxygen sensor element 60 and an outer tube 90 for protecting the inner tube 74. Using a supportive spacer 76 the terminals of the sensor element 60 extend through the inner tube 74, and the space in the inner tube 74 is filled with a packed insulating powder 78 (for example, 1:1 mixture of talc and glass powder) and a glass seal 80 using a low melting point glass. The main part of the sensor element 60 is encapsulated by a protective cap 82 fixed to the shell 72. The cap 82 is permeable to gases or is formed with openings. The terminals of the sensor element 60 are connected to lead wires 84, 86, 88, respectively. An end portion of the outer tube 90 is filled with a silicone rubber sealant 92 for insulating and protecting the connections of the lead wires to the sensor element terminals.

In operating the oxygen sensor 70 the resistance heater (16) in the sensor element 60 is energized by using the lead wires 86 and 88 to keep the oxygen sensitive thick-film 50 heated and active. The concentration of oxygen in a gas which makes contact with the $TiO_2$ film 50 is detected by measuring a change in the resistance of the film 50 by using the lead wires 84 and 86.

The internal resistance of the sensor element sample 60 in each oxygen sensor 70 was measured in a propane burner which was operated with an excess air factor ($\lambda$) of 0.9. The combustion gas temperature was 350°C. In measuring the internal resistance, a voltage of +12 V was applied to the lead wire 88 (connected to the heater in the sensor elment 60) while the lead wire 86 was grounded, and a fixed resistance of 50 k$\Omega$ was connceted between the lead wires 84 and 86. After that, each oxygen sensor 70 was subjected to an endurance test, which was heating the oxygen sensor for 5 min in a 500°C flame of a Bunsen burner and immediately cooling for 5 min and cycling the heating-and-cooling 500 times. The application of the voltage of +12 V and the connection of the resistance of 50 k$\Omega$ were maintained during the endurance test. After the endurance test the internal resistance of the sensor element sample 60 in the oxygen sensor was measured. The results are shown in Table 2.

## TABLE 2

| Sample No. | Internal Resistance (k$\Omega$) | |
|---|---|---|
| | Initially | After Endurance Test |
| 1 | 1.4 | 8.0 |
| 2 | 1.2 | 2.9 |
| 3 | 1.9 | 2.5 |
| 4 | 1.8 | 6.2 |
| 5 | 1.5 | 7.2 |
| 6 | 1.1 | 2.4 |
| 7 | 1.2 | 2.5 |
| 8 | 1.4 | 7.1 |
| 9 | 1.5 | 7.8 |
| 10 | 1.3 | 2.1 |
| 11 | 1.2 | 1.8 |
| 12 | 1.6 | 7.4 |
| 13 | 2.0 | 9.0 |
| 14 | 1.6 | 7.7 |
| 15 | 1.3 | 2.4 |
| 16 | 1.0 | 2.0 |
| 17 | 1.2 | 2.4 |
| 18 | 1.0 | 1.7 |
| 19 | 0.9 | 1.7 |
| 20 | 1.0 | 1.9 |
| 21 | 1.1 | 2.5 |
| 22 | 1.1 | 1.9 |
| 23 | 1.2 | 2.5 |
| 24 | 1.5 | 7.2 |
| 25 | 1.9 | 8.5 |
| 26 | 1.6 | 7.9 |
| 27 | 1.2 | 2.2 |
| 28 | 1.3 | 2.1 |
| 29 | 1.5 | 8.1 |

As can be seen in Table 2, after the endurance test some samples exhibited a considerable increase in the internal resistance, which is indicative of a deterioration of the contact of the $TiO_2$ thick-film 50 with the electrodes 12, 14 and, hence, insufficiency of the deposition of platinum at the interface between the thick-film and each electrode or inferiority of the manner of deposition of platinum. We judged that the deposition of platinum and the stability of the contact between the thick-film and the electrodes were satisfactory when the internal resistance measured after the endurance test did not exceed 5 k$\Omega$. By this criterion, the relations between the results of the endurance test and the temperature-humidity conditions of the treatment of the $TiO_2$ thick-film impregmated with the platinum compound in the reducing gas atmosphere were as shown in Fig. 16, wherein the circle marks represent the samples not higher than 5$\Omega$ in internal resistance and the cross marks the samples higher than 5$\Omega$ in internal resistance.

In Fig. 16 it is seen that when the temperature-humidity conditions of the treatment are in the Region A between the correlation curves I and II the obtained sensor element 60 is good in stability of internal resistance. In this Region A the depostion of platinum by the action of the reducing gas proceeds smoothly, and platinum deposits finely and densely at the interface between the thick-film 50 and each electrode 12, 14 with the effect of enhancing the connection of the thick-film 50 to each electrode 12, 14 both mechanically and electrically. In the Region B on the lower temperature side, the rate of deposition of platinum is low and the amount of deposition of platinum is insufficient. In the Region C on the higher temperature side, the amount of deposition of platinum at the interface between the thick-film 50 and each electrode 12, 14 is insufficient probably by reason that the rate of decomposition of chloroplatinic acid in the thick-film 50 is too high compared with the rate of its migration to the interface between the film 50 and each electrode 12, 14, so that a large portion of deposited platinum is finely dispersed in the thick-film 50.

## Claims

1. A method of producing a thick-film gas sensor element, comprising the steps of:
   (a) forming at least one pair of electrode films on a surface of a ceramic substrate by using at least on metal of the platinum group as the principal material of the electrode films;
   (b) applying a paste comprising a powder of a gas sensitive material to said surface of the ceramic substrate so as to cover selected portions of the electrode films together with a selected area of said surface and firing the applied paste to thereby form a porous thick-film of the gas sensitive material;
   (c) impregnating said porous thick-film with a solution of at least one compound of a metal of the platinum group; and
   (d) after step (c) maintaining the substrate in a reducing gas atmosphere having a controlled humidity at a temperature in the range from -5°C to 180°C to thereby deposit a conductor comprising at least one metal of the platinum group at the interface between said porous thick-film and each of the electrode films.

2. A method according to Claim 1, wherein said principal material of the electrode films comprises platinum, said solution comprising a platinum compound.

3. A method according to Claim 2, wherein said platinum compound is chloroplatinic acid.

4. A method according to Claim 2, wherein said solution further comprises a compound of another metal selected from the group consisting of rhodium and palladium.

5. A method according to Claim 1, wherein said solution is an aqueous solution.

6. A method according to Claim 1, wherein said temperature at step (d) is in the range from 60 to 95°C, the relativel humidity in said reducing gas atmosphere is in the range from 0 to 100%.

7. A method acording to Claim 1, wherein said temperature at step (d) is higher than 95°C, and a lower limit is placed on the relative humidity in said reducing gas atmosphere, said lower limit becoming higher as the temperature becomes higher.

8. A method according to Claim 1, wherein said temperature at step (d) is lower than 60°C, and an upper limit is placed on the relative humidity in said reducing gas atmosphere, said upper limit becoming lower as the temperature becomes lower.

9. A method according to Claim 1, wherein said temperature at step (d) and the relative humidity in said reducing gas atmosphere are within the Region A indicated in the chart of Fig. 16 of the accompanying drawings.

10. A method according to Claim 1, wherein said reducing gas is selected from the group consisting of hydrogen gas and carbon monooxide gas.

11. A method according to Claim 1, wherein said reducing gas is diluted with an inactive gas.

12. A method according to Claim 1, further comprising the step of after step (d) heating the gas sensor element at a temperature not lower than 150°C.

13. A method according to Claim 12, wherein the heating after step (d) is carried out at a temperature higher than 200°C.

14. A method according to Claim 1, wherein said gas sensitive material is a transition metal oxide selected from the group consisting of $SnO_2$, $ZnO$, $Fe_2O_3$, $TiO_2$ and $CoO$.

**Patentansprüche**

1. Verfahren zum Herstellen eines dickschichtigen Gasfühlerelements, umfassend die folgenden Schritte:
   a) Ausbilden wenigstens eines Paares von Elektrodenfilmen auf einer Oberfläche eines keramischen Substrates durch Verwendung wenigstens eines Metalles der Platingruppe als Hauptwerkstoff der Elektrodenfilme;
   b) Aufbringen einer ein Pulver eines gassensitiven Materials enthaltenden Pulvers auf diese Oberfläche des keramischen Substrates, so daß ausgewählte Bereiche der Elektrodenfilme zusammen mit einem ausgewählten Bereich der Oberfläche abgedeckt sind, und Brennen der aufgetragenen Paste, um auf diese Weise eine poröse Dickschicht des gassensitiven Materials zu bilden;
   c) Imprägnieren der porösen Dickschicht mit einer Lösung wenigstens einer Verbindung eines Metalls der Platingruppe; und
   d) nach Schritt c) Verweilenlassen des Substrates in einer reduzierenden Gasatmosphäre mit einer gesteuerten Feuchtigkeit bei einer Temperatur im Bereich von minus 5°C bis 180°C, um auf diese Weise einen Leiter abzuscheiden, welcher wenigstens ein Metall der Platingruppe an der Grenzfläche zwischen der porösen Dickschicht und jedem der Elektrodenfilme aufweist.

2. Verfahren nach Anspruch 1, wobei das Hauptmaterial der Elektrodenfilme Platin enthält und die Lösung eine Platinverbindung enthält.

3. Verfahren nach Anspruch 2, wobei die Platinverbindung Chlorplatinsäure ist.

4. Verfahren nach Anspruch 2, wobei die Lösung ferner eine Verbindung eines anderen Metalls enthält, welches aus der aus Rhodium und Palladium bestehenden Gruppe ausgewählt ist.

5. Verfahren nach Anspruch 1, wobei die Lösung eine wässrige Lösung ist.

6. Verfahren nach Anspruch 1, wobei die Temperaturen des Schrittes (d) im Bereich von 60 bis 95°C liegen und die relative Feuchte in der reduzierenden Gasatmosphäre im Bereich von 0 bis 100 % liegt.

7. Verfahren nach Anspruch 1, wobei die Temperatur beim Schritt (d) höher ist als 95°C und wobei hinsichtlich der relativen Feuchte in der reduzierenden Gasatmosphäre ein unterer Grenzwert vorgesehen ist, wobei dieser untere Grenzwert mit steigender Temperatur ansteigt.

8. Verfahren nach Anspruch 1, wobei die Temperatur während des Schrittes (d) niedriger ist als 60°C und wobei bezüglich der relativen Feuchte in der reduzierenden Gasatmosphäre ein oberer Grenzwert gesetzt wird, wobei dieser obere Grenzwert mit sinkender Temperatur abnimmt.

9. Verfahren nach Anspruch 1, wobei die Temperatur während des Schrittes (d) und die relative Feuchte in der reduzierenden Gasatmospäre innerhalb des Bereiches A liegen, welcher in dem Diagramm gemäß Figur 16 der beigefügten Zeichnungen gegeben ist.

10. Verfahren nach Anspruch 1, wobei das reduzierende Gas ausgewählt wird aus einer aus Wasserstoffgas und Kohlenmonoxidgas bestehenden Gruppe.

**11.** Verfahren nach Anspruch 1, wobei das reduzierende Gas mittels eines unaktiven Gases verdünnt wird.

**12.** Verfahren nach Anspruch 1, wobei ferner der Schritt vorgesehen ist, nach dem Schritt (d) das Gasfühlerelement auf eine Temperatur von nicht weniger als 150°C aufzuheizen.

**13.** Verfahren nach Anspruch 12, wobei das Heizen nach dem Schritt (d) bei einer Temperatur von mehr als 200°C ausgeführt wird.

**14.** Verfahren nach Anspruch 1, wobei das gassensitive Material ein Übergangsmetalloxid ist, welches ausgewählt wird aus der aus $SnO_2$, $ZnO$, $Fe_2O_3$, $TiO_2$ und $CoO$ bestehenden Gruppe.

**Revendications**

**1.** Méthode de production d'un capteur de gaz en couche épaisse, comprenant les étapes de :
(a) former au moins une paire de couches d'électrode sur une surface d'un substrat en céramique en utilisant au moins un métal du groupe platine en tant que matériau principal des couches d'électrode ;
(b) appliquer une pâte comprenant une poudre d'un matériau sensible au gaz à ladite surface du substrat en céramique afin de couvrir des portions sélectionnées des couches d'électrode ainsi qu'une aire sélectionnée de ladite surface et cuire la pâte appliquée pour ainsi former une couche épaisse poreuse du matériau sensible au gaz ;
(c) imprégner ladite couche épaisse poreuse d'une solution d'au moins un composé d'un métal du groupe platine ; et
(d) après l'étape (c), maintenir le substrat dans une atmosphère d'un gaz réducteur ayant une humidité contrôlée à une température comprise entre -5°C et 180°C pour ainsi déposer un conducteur comprenant au moins un métal du groupe platine à l'interface entre ladite couche épaisse poreuse et chacune desdites couches d'électrode.

**2.** Méthode selon la revendication 1, où ledit matériau principal des couches d'électrode se compose de platine, ladite solution comprenant un composé de platine.

**3.** Méthode selon la revendication 2, où ledit composé de platine est l'acide chloroplatinique.

**4.** Méthode selon la revendication 2, où ladite solution contient de plus un composé d'un autre métal choisi dans le groupe consistant en rhodium et palladium.

**5.** Méthode selon la revendication 1, où ladite solution est une solution aqueuse.

**6.** Méthode selon la revendication 1, où ladite température à l'étape (d) est comprise entre 60 et 95°C, l'humidité relative dans ladite atmosphère de gaz réducteur est comprise entre 0 et 100%.

**7.** Méthode selon la revendication 1, où ladite température à l'étape (d) est plus importante que 95°C et une limite inférieure est imposée sur l'humidité relative dans ladite atmosphère de gaz réducteur, ladite limite inférieure augmentant tandis que la température augmente.

**8.** Méthode selon la revendication 1, où ladite température à l'étape (d) est plus basse que 60°C et une limite supérieure est imposée sur l'humidité relative dans ladite atmosphère de gaz réducteur, ladite limite supérieure diminuant tandis que la température diminue.

**9.** Méthode selon la revendication 1, où ladite température à l'étape (d) et l'humidité relative dans ladite atmosphère de gaz réducteur sont dans la région A indiquée sur le diagramme de la figure 16 des dessins joints.

**10.** Méthode selon la revendication 1, où ledit gaz réducteur est choisi dans le groupe consistant en hydrogène gazeux et gaz carbonique.

**11.** Méthode selon la revendication 1, où ledit gaz réducteur est dilué avec un gaz inactif.

**12.** Méthode selon la revendication 1, comprenant de plus l'étape de, après l'étape (d), chauffer le capteur de gaz à une température qui n'est pas inférieure à 150°C.

13. Méthode selon la revendication 12, où le chauffage après l'étape (d) est effectué à une température supérieure à 200°C.

14. Méthode selon la revendication 1, où ledit matériau sensible au gaz est un oxyde d'un métal de transition choisi dans le groupe consistant en $SnO_2$, $ZnO$, $Fe_2O_3$, $TiO_2$ et $CoO$.

## FIG.1

16  14  12

2   2

10

20  18  22

## FIG.2

16  14  12  16

10

## FIG.3

16  14  12

10

20

22

18

26  24  28

## FIG.4

20  26  18  24  28

22

10

## FIG.5

14  12

6   6

32

30

26  24  28

## FIG.6

30  14  12  32

16

10

EP 0 360 159 B1

**FIG.7**

**FIG.9**

**FIG.11**

**FIG.8**

**FIG.10**

**FIG.12**

EP 0 360 159 B1

14

# FIG.13

# FIG.14

# FIG.15

# FIG.16